# EUROPEAN PATENT SPECIFICATION

(11) **EP 4 632 048 B1**
(45) Date of publication and mention of the grant of the patent: **29.07.2026**
(21) Application number: 23919923.5
(22) Date of filing: 06.12.2023
(51) Int. Cl.: C10L 5/02, C10L 5/08, C10L 5/28, C10L 5/36, C10L 5/40, C10L 5/44, C10B 53/02, C10B 53/08, C04B 35/52, C04B 35/645, C10L 5/04

(54) **METHOD FOR PRODUCING AGGLOMERATES MAINLY COMPOSED OF CARBON**
VERFAHREN ZUR HERSTELLUNG HAUPTSÄCHLICH AUS KOHLENSTOFF AUFGEBAUTER AGGLOMERATE
PROCÉDÉ DE PRODUCTION D'AGGLOMÉRATS PRINCIPALEMANT CONSTITUÉS DE CARBONE

(30) Priority: 30.01.2023 JP 2023012211
(43) Date of publication of application: 15.10.2025
(73) Proprietor: JFE Steel Corporation, Tokyo 100-0011 (JP)
(72) Inventor: DOHI Yusuke, Tokyo 100-0011 (JP); IGAWA Daisuke, Tokyo 100-0011 (JP); ARAKAWA Sara, Tokyo 100-0011 (JP); TAKEHARA Kenta, Tokyo 100-0011 (JP); KAWAI Yuya, Tokyo 100-0011 (JP); TAKASHIMA Takanori, Tokyo 100-0011 (JP); YAMAMOTO Tetsuya, Tokyo 100-0011 (JP); SHIMOYAMA Izumi, Tokyo 100-0011 (JP)
(74) Representative: Hoffmann Eitle
(86) International application number: PCT/JP2023/043726
(87) International publication number: WO 2024/161788

(56) References cited:
- WO-A1-2006/078023
- CN-A- 113 817 521
- JP-A- 2004 359 898
- JP-A- 2008 274 113
- JP-A- 2009 298 653
- JP-A- 2012 046 729
- JP-A- 2015 229 751
- WIBAWA ADITYA ET AL: "High-Strength Formed Coke from Torrefied Biomass and Its Blend with Noncaking Coal", ENERGY & FUELS, vol. 36, no. 16, 5 August 2022 (2022-08-05), pages 9121 - 9132, XP093205898, DOI: 10.1021/acs.energyfuels.2c01722

## Description

### TECHNICAL FIELD

The present disclosure relates to a method of producing an agglomerate mainly composed of carbon.

### BACKGROUND

Patent Literature (PTL) 1 discloses a lightweight high-strength carbon material of plant-based biomass origin and a method of producing the material. In this production method, a plant biomass is ground to 1 µm to 50 µm and subjected to heating and compression to 150 °C in a vacuum or inert atmosphere at a pressure of 20 MPa to 500 MPa. Compression is stopped and only heating is performed in a vacuum or inert atmosphere beyond 150 °C up to a certain temperature of 250 °C to 300 °C. Once that temperature is reached in a vacuum or inert atmosphere, the plant biomass is compression molded (secondary pressurization) at a pressure of 20 MPa to 500 MPa for a fixed time of 1 min to 30 min, and the molding precursor is sintered at 500 °C to 1500 °C in a vacuum or inert atmosphere. In this production method, it is noted that when the secondary pressurization temperature is 280 °C, no fluidized powder leaks from the gap between the column press mold and the cylindrical rod during heating and compression, and no cracks are observed in the molding precursor obtained by heating and compression, resulting in a good molding precursor. It is also noted that in this production method, when the secondary pressurization temperature is other than 280 °C, the fluidized powder leaks from the gap between the column press mold and the cylindrical rod during heating and compression, or in the molding precursor obtained by heating and compression, cracks are observed or the material is crushed. Hence, a good molding precursor is not obtained.

Non-patent Literature (NPL) 1 discloses the results of a study of coke strength (strength of molded coke for blast furnaces) by an indirect tensile strength test method.

NPL 2 describes a method of producing coke. In this production method, various types of coal including non-coking coal (carbon content of 67.0 wt%-daf to 84.6 wt%-daf, natural logarithm of liquidity of 0 to 1.1) are ground to a particle size of 106 µm or less or finely ground to about 10 µm or less by ball milling, and the ground material is then molded at a temperature of 240 °C and a mechanical pressure of 128 MPa. The molding is then carbonized. This production method is said to be capable of producing coke with a bulk density of 1.10 g/cm³ to 1.49 g/cm³ and a cold tensile strength of 1.6 MPa to 35.1 MPa.

### CITATION LIST

### Patent Literature

PTL 1: JP 2009-298653 A

### Non-patent Literature

NPL 1: A Study on The Tensile Strength of Coke by an Indirect Tensile Strength Test Method (I), Journal of the Fuel Society of Japan, Vol. 54, No. 584, 1975, pp. 983-993, T. Miyagawa et al, [retrieved on October 14, 2022], Internet <https://www.jstage.jst. go.jp/article/jiel922/54/12/54_12_983/_pdf'>
NPL 2: K. Uchida, S. Kudo, A. Mori, U. P. M. Ashik, K. Norinaga, Y. Dohi, K. Uebo, and J-i. Hayashi: ISIJ International, 59 (2019), p. 1449.

### SUMMARY

### (Technical Problem)

As a countermeasure against global warming, demand exists for an equilibrium between emissions and absorption of greenhouse gases such as carbon dioxide (so-called carbon neutrality). For example, there is a desire for production of agglomerates mainly composed of carbon, such as coke used in iron making, from carbon-neutral biomass.

However, as exemplified by the method of producing lightweight, high-strength carbon materials of plant-based biomass origin disclosed in PTL 1, conventional techniques have problems such as a narrow temperature control range during compression molding (compacting), making it difficult to control production. The practical production of an agglomerate mainly composed of carbon of biomass origin has thus been difficult. Hence, there is a desire for provision of a practical method of producing an agglomerate mainly composed of carbon of biomass origin.

It is an aim of the present disclosure, in light of these circumstances, to provide a method of producing an agglomerate mainly composed of carbon of biomass origin.

### (Solution to Problem)

In order to achieve the aforementioned aim, the method of producing an agglomerate is as follows.
[1] A method of producing an agglomerate mainly composed of carbon, the method comprising:
   a grinding step of grinding biomass having a volatile matter of 1 mass% or more and less than 20 mass% on a dry basis to obtain a biomass powder having a maximum particle size of 300 µm or less, the volatile matter and the particle size being measured according to the methods specified herein; and
   a hot pressing step of compacting the biomass powder at a temperature included in a temperature range of 600 °C or more and 1250 °C or less in an oxygen-deprived environment to obtain an agglomerate.
[2] A method of producing an agglomerate mainly composed of carbon, the method comprising:
   a mixing step of mixing coal having a volatile matter of 1 mass% or more and less than 20 mass% on a dry basis with biomass having a volatile matter of 1 mass% or more and less than 20 mass% on a dry basis to obtain a mixture, the volatile matter being measured according to the method specified herein;
   a grinding step of grinding the mixture to obtain a mixed powder having a maximum particle size of 300 µm or less, the particle size being measured according to the method specified herein; and
   a hot pressing step of compacting the mixed powder at a temperature included in a temperature range of 600 °C or more and 1250 °C or less in an oxygen-deprived environment to obtain an agglomerate.

A method of producing an agglomerate mainly composed of carbon, the method comprising:
a powder mixing step of mixing coal powder with biomass powder to obtain a mixed powder, the coal powder being a powder of coal having a volatile matter of 1 mass% or more and less than 20 mass% on a dry basis and a maximum particle size of 300 µm or less, the biomass powder being a powder of biomass having a volatile matter of 1 mass% or more and less than 20 mass% on a dry basis and a maximum particle size of 300 µm or less, the volatile matter and the particle size being measured according to the methods specified herein; and
a hot pressing step of compacting the mixed powder at a temperature included in a temperature range of 600 °C or more and 1250 °C or less in an oxygen-deprived environment to obtain an agglomerate.

[4] The method of producing an agglomerate mainly composed of carbon according to [2] or [3], wherein the coal is heat-treated coal.

[5] The method of producing an agglomerate mainly composed of carbon according to any one of [1] to [4], wherein the biomass is heat-treated biomass.

[6] The method of producing an agglomerate mainly composed of carbon according to any one of [1] to [5], wherein a molding pressure of the compacting is 20 MPa or higher.

[7] The method of producing an agglomerate mainly composed of carbon according to any one of [1] to [6], wherein in the compacting, heating is started after pressurization is started.

### (Advantageous Effect)

According to the present disclosure, a method of producing an agglomerate mainly composed of carbon of biomass origin can be provided.

### BRIEF DESCRIPTION OF THE DRAWINGS

In the accompanying drawings:
FIG. 1 is a graph illustrating the relationship between indirect tensile strength and volatile matter for agglomerates according to Example 1;
FIG. 2 is a polarized light microscope image (100x magnification ratio) of a cross-section of the agglomerate according to Example 1;
FIG. 3 is a scanning electron microscope image (1000x magnification ratio) of a cross-section of the agglomerate according to Example 1;
FIG. 4 is a scanning electron microscope image (8000x magnification ratio) of a cross-section of the agglomerate according to Example 1;
FIG. 5 is a transmission electron microscope (TEM) image (100000x magnification ratio) of a cross-section of the agglomerate according to Example 1;
FIG. 6 is a transmission electron microscope (TEM) image (500000x magnification ratio) of a cross-section of the agglomerate according to Example 1;
FIG. 7 is a graph illustrating the relationship between indirect tensile strength and molding pressure for agglomerates according to Example 2; and
FIG. 8 is a graph illustrating the relationship between indirect tensile strength and mixture ratio of heat-treated biomass for agglomerates according to Example 4.

### DETAILED DESCRIPTION

With reference to the drawings, the method of producing an agglomerate mainly composed of carbon according to an embodiment of the present disclosure will be described.

### (First Embodiment)

A method of producing an agglomerate mainly composed of carbon according to the present embodiment includes a grinding step of grinding biomass having a volatile matter of 1 mass% or more and less than 20 mass% on a dry basis (D.B.) to obtain a biomass powder having a maximum particle size of 300 µm or less, and a hot pressing step of compacting the biomass powder at a temperature included in a temperature range of 600 °C or more and 1250 °C or less in an oxygen-deprived environment to obtain an agglomerate. Hereinafter, the volatile matter of the biomass is expressed as mass% on a dry basis.

This production method enables the production of an agglomerate mainly composed of carbon of biomass origin, from biomass with a volatile matter of 1 mass% or more and less than 20 mass%. In other words, the production method according to the present embodiment can produce an agglomerate mainly composed of carbon, using biomass with a volatile matter of 1 mass% or more and less than 20 mass% as a raw material.

In the following, the agglomerate mainly composed of carbon may be referred to simply as an agglomerate. The term "agglomerate mainly composed of carbon" means an agglomerate in which the carbon ratio in the agglomerate is 70 mass% or more and 100 mass% or less on a dry basis.

In greater detail, in this production method, the agglomerate is formed by a solid phase sintering-like phenomenon, instead of a liquid phase sintering-like phenomenon in which liquid phase components that can become volatile are used to bond or fuse biomass powder particles together. Therefore, it is possible to obtain an agglomerate with high enough strength to withstand impact during transport and static loading when the agglomerate is formed into a packed bed and stored in a yard or hopper. It is also possible to obtain a highdensity agglomerate (dense agglomerate) with a bulk density exceeding 1.0 g/cm³.

The volatile matter of the biomass in the present embodiment is measured according to "Coal and coke - Methods for proximate analysis" (JIS M 8812:2004) specified in the Japanese Industrial Standards (JIS).

The bulk density of the agglomerate in the present embodiment is the value obtained by dividing the mass of the agglomerate by the external volume of the agglomerate (the sum of the volume of the solid portion and the volume of the open and closed pores of the target material). The mass of the agglomerate was measured by an electronic balance. The external volume of the mass is calculated by measuring the diameter and height of the cylindrical agglomerate with calipers.

The strength of the agglomerate in the present embodiment refers to the cold indirect tensile strength measured by the method described in NPL 1. Hereinafter, the indirect tensile strength measured by this method may be referred to simply as strength.

A strength of 1 MPa or higher is required as the strength high enough to withstand impact during transport and static loading when the agglomerate is formed into a packed bed and stored in a yard or hopper. In the following description, an agglomerate is evaluated as high strength (strong) in the case of having a strength of 1 MPa or higher. Among these, an agglomerate (i.e., coke) that is strong enough to be used in a conventional blast furnace process may be evaluated as being usable as a high-strength coke. Coke with a strength generally usable in a blast furnace process is defined as having a strength of 3 MPa or higher.

Biomass is a generic term for a certain amount of accumulated plant and animal resources and waste derived from these resources (excluding fossil resources). Biomass in the present embodiment includes any biomass that produces carbides when pyrolyzed, such as agricultural, forestry, livestock, fishery, and waste biomass.

Biomass with a high effective amount of heat generated is preferably used as the raw material for the agglomerate in the present embodiment. Woody biomass, for example, is preferably used.

Examples of woody biomass include papermaking auxiliary materials such as pulp black liquor and chip dust; lumber auxiliary material such as bark and sawdust; forest residues such as branches, leaves, treetops, and cut pieces; thinned wood from cedar, cypress, pine, and other species; materials from special forest products such as waste logs for edible fungi; and forestry biomass from firewood and charcoal forests such as chinquapin, oak, and pine, and short-rotation forestry such as willow, poplar, eucalyptus, and pine. Woody biomass also includes general waste such as pruned branches from municipal roadside trees and garden trees of private homes, along with industrial waste such as pruned branches from national or prefectural roadside trees and garden trees of businesses, and construction and building waste.

Some agricultural biomass such as rice husks, wheat straw, rice straw, sugarcane residue, palm oil, and the like, which are classified as agricultural biomass and are generated from waste or auxiliary material, along with rice bran, rapeseed, soybeans, and the like, which are sourced from energy crops, can also be suitably used as biomass.

Biomass generally contains high moisture and volatile matter and low bulk density. Therefore, low energy density and low conveyance efficiency are major challenges for industrial applications. For this reason, compression/molding and carbonization processes are widely carried out to increase the bulk density or energy density.

In recent years, the distribution of carbonized and semi-carbonized (that is torrefied) biomass and pellets molded from carbonized and torrefied biomass (referred to as black pellets) has increased. In the present embodiment, carbonized or torrefied biomass having a volatile matter of 1 mass% or more and less than 20 mass% can be used as the raw material for the agglomerate according to the present embodiment.

Biomass with a volatile matter of 20 mass% or more can also be used as a raw material for the agglomerate according to the present embodiment by performing heat treatment in advance in an oxygen-deprived environment to obtain a heat-treated biomass (an example of biomass) whose volatile matter is adjusted to 1 mass% or more and less than 20 mass%.

The heat treatment of the biomass is preferably performed in an atmosphere where the oxygen supply is cut off. The heat treatment of the biomass may, for example, be performed with the biomass contained in a container that forms a space where air is blocked from entering and inert gas is allowed to flow through. The heat treatment of the biomass may be performed by heating a container containing the biomass and transferring heat from the container. In other words, the heat treatment of the biomass may be performed by heating a container in which the biomass is housed, thereby heating the biomass to 500 °C or more.

If the heat treatment temperature exceeds 1100 °C, the volatile matter remaining in the heat-treated biomass and biomass powder may be less than 1 mass%, making it difficult for the solid phase sintering-like phenomenon to occur.

The reaction rate of the pyrolysis reaction of biomass during heat treatment is usually fast, so the time required for the pyrolysis reaction in the heat treatment to be completed is short. Therefore, the treatment time required for heat treatment is 1 min or more. The time for heat treatment (processing time of heat treatment, hereinafter referred to as heat treatment time) is preferably 10 min or more. This eliminates the temperature difference between the temperature of the biomass and the temperature of the container and allows for homogeneous heat treatment of the entire biomass. This also enables the heat treatment to be performed with the temperature of the entire biomass reliably raised to an even heat treatment temperature (i.e., heated evenly), thereby suppressing variation in the quality of the heat-treated biomass.

No upper limit is placed on the heat treatment time, but if the heat treatment time is too long, the energy required for heat treatment increases, which leads to an undesired increase in costs. A heat treatment time of 60 min or less is usually sufficient. The heat treatment time is the length of time during which the temperature of the biomass is maintained at a predetermined heat treatment temperature from the point in time at which the temperature of the biomass reaches this heat treatment temperature.

The heat treatment can be performed using a heating apparatus such as an electric furnace, rotary kiln, fluidized bed heating furnace, screw-type heating furnace, shaft furnace, or pyrolysis furnace.

The grinding step is a process of grinding the biomass to obtain a biomass powder having a maximum particle size of 300 µm or less. The particle size in the present embodiment refers to the maximum particle diameter, unless otherwise stated. In the case of measuring with a particle size distribution measurement apparatus, the maximum particle size can be measured as follows.

In the present embodiment, the particle size and particle size distribution may be measured using commercially available particle size distribution measurement apparatuses. The particle size and particle size distribution (on a volume basis) used in the present embodiment were measured using a laser diffraction and scattering particle size distribution analyzer "Laser Micronizer LMS-3000" (hereinafter referred to simply as the particle size distribution measurement apparatus) manufactured by Malvern Panalytical. That is, in a particle size distribution of the particles included in the mixed powder as measured by the particle size distribution measurement apparatus, the particle size equal to or greater than 95 % of the particles is defined as the maximum particle size (maximum value). Hereinafter, the simple mention of particle size, particle size distribution, or the like is to be understood as referring to the values measured by the aforementioned particle size distribution measurement apparatus.

In a case in which the biomass powder contains coarse particles with a particle size greater than 300 µm, these coarse particles may remain in the agglomerate and reduce its strength. The solid phase sintering-like phenomenon that causes the bonding of particles in the biomass powder during the subsequent hot pressing step is further promoted as the particle size is smaller. The residual coarse particles may therefore inhibit bonding between particles, resulting in a decrease in strength. Furthermore, defects easily form around the coarse particles in the agglomerate, which may cause stress concentration and become the starting point of fracture when an external force is applied, resulting in a decrease in strength.

The particle size of the biomass powder is preferably 100 µm or less. The appropriately small particle size of the biomass powder makes the physical structure in the agglomerate dense and homogeneous, which contributes to increased strength of the agglomerate. The finer the particle size of the biomass powder, the better the strength of the agglomerate, and hence a finer particle size is preferred. The minimum particle size of biomass powder is therefore not limited. However, when productivity is also taken into consideration in the case of reducing the particle size of the biomass powder, setting the maximum particle size of the particles in the biomass powder to less than 20 µm increases the cost of fine grinding while only achieving a limited improvement in the performance of the agglomerate. Therefore, a maximum particle diameter of 20 µm or more suffices to produce an agglomerate of sufficient strength.

No limitations are placed on the method or apparatus for fine grinding. A cutter mill, a hammer mill, a pin mill, a jet mill, a media mill such as a ball mill, or the like may be used as the apparatus for fine grinding biomass. The apparatus for fine grinding is not limited to apparatuses that only perform fine grinding. For example, a grinder with a built-in classifier may be used.

The hot pressing step is a process of compacting the biomass powder at a temperature included in a temperature range of 600 °C or more and 1250 °C or less in an oxygen-deprived environment to obtain an agglomerate.

In the hot pressing step, the biomass powder is mechanically pressurized and molded, i.e., compacted. Mechanical pressurization refers to compressing biomass powder with a pestle and mortar, a press mold (mold), or a member that serves as physical walls such as a compression roller. In the following, the pressure applied mechanically to the biomass powder during the hot pressing step is referred to as the molding pressure.

In the hot pressing step, it suffices to be able to pressurize (i.e., hot press) the biomass powder at a temperature included in a temperature range of 600 °C or more and 1250 °C or less. The hot pressing step may, for example, be for heating the biomass powder to a temperature included in the above temperature range, stopping heating, and then compacting at a temperature included in the above temperature range. The hot pressing step may be for compacting at a temperature included in the above temperature range while the biomass powder is heated to raise the temperature. In this case, the biomass powder may be pressurized only during a portion of the entire process of heating and raising the temperature, or the biomass powder may be pressurized during the entire process. From the perspective of controlling or preventing a temperature drop during compacting, the hot pressing step is preferably performed while heating at least to maintain the temperature, even if the temperature is not increased.

The hot pressing apparatus for compacting the biomass powder at temperatures including the temperature range of 600 °C or more and 1250 °C or less is not particularly limited. The biomass powder can be pressurized by storing the biomass powder in a space enclosed by the aforementioned walls (for example, in a press mold for hot pressing) and pressurizing the biomass powder by compression via the walls. The heat source for heating the biomass powder may, for example, be electric resistance heating, microwave heating, or high-frequency induction heating.

When biomass powder is heated, the biomass powder expands thermally. The bulk density of the biomass powder packed bed decreases accordingly. In contrast, heating the biomass powder under pressure compresses the packed bed of biomass powder in resistance to thermal expansion and prevents a decrease in the bulk density of the packed bed of biomass powder. This increases the number of contact points between particles and promotes the solid phase sintering-like phenomenon. As a result, an agglomerate with high bulk density and high strength can be obtained more effectively.

Heating of the biomass powder in the hot pressing step may be achieved via the aforementioned walls. The temperature range of the biomass powder under pressure in the hot pressing step is referred to as the molding temperature range. In other words, the molding temperature range is the temperature range from the temperature of the biomass powder at the start of pressurization (the temperature at the lower limit of the molding temperature range) to the temperature of the biomass powder at the end of pressurization (the temperature at the upper limit of the molding temperature range). The temperature at the upper limit of the molding temperature range is 1250 °C, the same as the upper limit temperature of the hot pressing step. The temperature at the lower limit of the molding temperature range is, for example, the temperature of the biomass powder at the time it is charged into the press mold for hot pressing.

In the hot pressing step, the biomass powder is heated to 600 °C or more in an atmosphere where the oxygen supply is cut off, thereby bonding and densifying the biomass powder particles by a solid phase sintering-like phenomenon. As a result, an agglomerate with high bulk density and high strength can be produced. Note that solid phase sintering-like bonding of particles generally occurs (appears) at 600 °C or more.

The atmosphere in the hot pressing step in which the oxygen supply is cut off is, for example, an atmosphere in a space in which the inflow of air (oxygen) is inhibited and an inert gas such as nitrogen is passed through. In an oxygen-supplied environment, the raw material will burn and be lost.

The molding temperature range in the hot pressing step needs to include temperatures in the temperature range of 600 °C or more and 1250 °C or less. The molding temperature range preferably includes temperatures in a temperature range of 600 °C or more. The molding temperature range preferably includes temperatures in a temperature range of 1000 °C or less. In other words, part or all the molding temperature range needs to overlap with the temperature range of 600 °C or more and 1250 °C or less. This enables the solid phase sintering-like phenomenon to occur and agglomerate the biomass powder. As described above, the solid phase sintering-like phenomenon occurs at 600 °C or more. The solid phase sintering-like phenomenon is particularly pronounced at 600 °C or more and 1250 °C or less. Since carbonization progresses, thus serving as a carbonization process, at the hot pressing step temperature of 600 °C or more and 1250 °C or less, a separate carbonization process is not necessarily required. Further carbonization may, however, be performed after the hot pressing step that also serves as a carbonization process.

In a case in which a carbonization process is performed after the hot pressing step, the carbonization process is performed in an atmosphere where the oxygen supply is cut off, as in the hot pressing step. The carbonization temperature, which is the temperature of the carbonization process, is preferably 600 °C or more. This is because the solid phase sintering-like phenomenon that causes bonding of particles in the biomass powder occurs at 600 °C or more, as described above. On the other hand, a carbonization temperature exceeding 1250 °C leads to desorption and the like of hetero elements in the agglomerate, and the strength decreases. At carbonization temperatures of 1250 °C or less, the bulk density and strength of the agglomerate are higher as the carbonization temperature is higher. In the case of application to coke for a blast furnace, a high strength (3 MPa or higher, preferably 5 MPa or higher) is required for the agglomerate. Hence, the carbonization temperature is preferably 900 °C or more. The carbonization temperature is preferably 1,250 °C or less. The carbonization temperature is more preferably 1,100 °C or less. The carbonization temperature is preferably higher than the temperature of the hot pressing step. For example, in a case in which the hot pressing step is performed at 700 °C, performance of the carbonization process at a higher temperature than 700 °C can shrink the agglomerate and increase its density, further increasing its strength. In a case in which the hot pressing step also serves as the carbonization process, the maximum arrival temperature in the hot pressing step is the carbonization temperature.

In a case in which the biomass powder is heated during compacting, the temperature at the lower limit of the molding temperature range is preferably as low as possible. In a case in which the biomass powder is heated during compacting, the temperature at the upper limit of the molding temperature range is preferably as high as possible. This is because in the case of heating the biomass powder while compacting, the reaction time can be lengthened if the molding temperature range is expanded. The temperature at the lower limit of the molding temperature range is the temperature at which pressurization begins in the hot pressing step (for example, room temperature). Part of the temperature range of the temperature raising process may be used as the molding temperature range, but to extend the molding temperature range, pressurization is preferably started simultaneously with or after starting to heat the biomass powder, for example, when the heating is started or immediately after heating.

The heating rate is preferably 30 °C/min or less. By setting the heating rate to 30 °C/min or less, the temperature variation can be reduced and a localized reduction in strength can be avoided.

The higher the molding pressure, the more contact points between particles in the biomass powder, which promotes the solid phase sintering-like phenomenon. Therefore, the higher the molding pressure, the higher the bulk density of the agglomerate, which in turn increases its strength.

When the molding pressure is 11 MPa or higher, the bulk density and strength of the agglomerate (i.e., the quality of the agglomerate) are stable. If the molding pressure is less than 11 MPa, a high-strength molding might not be obtained. Therefore, the molding pressure is preferably 11 MPa or higher. If the molding pressure is too high, the production cost may be high. A molding pressure of 300 MPa or less is sufficient.

If the volatile matter of the biomass powder serving as the raw material is less than 1 mass%, it may not be possible to obtain an agglomerate of appropriate bulk density or strength from the biomass powder. The solid phase sintering-like phenomenon that occurs in the hot pressing step is thought to be driven by the aromatization or polycyclization reaction of the biomass or heat-treated biomass serving as raw material. In this reaction, hydrogen is released. In addition to this, CO, methane, and other hydrocarbons are released as a result of the decomposition of oxygen-containing functional groups and alkyl groups. In other words, the volatile matter of the raw material corresponds to the amount of hydrogen, CO, methane, and other hydrocarbons released during the aromatization or polycyclization reaction that drives the solid phase sintering-like phenomenon and indicates the potential for the solid phase sintering-like phenomenon. In other words, if the volatile matter is less than 1 mass%, the solid phase sintering-like phenomenon is unlikely to occur.

If the volatile matter is too high, such as over 20 mass%, the gas generated during heating (gas generated by the volatilization of the volatile matter or gas generated by the decomposition of the volatile matter) will expand, or the biomass powder will foam. Compression of the biomass powder by the hot pressing apparatus during compacting is consequently inhibited, and the biomass powder may not be pressurized sufficiently, resulting in a decrease in bulk density of the agglomerate. The gas generated during heating may also cause the internal pressure of the space enclosed by the walls of the mortar or press mold, for example, in the hot pressing apparatus to exceed the pressure that is intended to be applied to the biomass powder. In such cases, there is a risk of damage to the hot pressing apparatus or the walls. The gas generated during heating also tends to stain the walls. Therefore, the volatile matter of the biomass is set to less than 20 mass%.

In order to obtain an agglomerate with a strength of 3 MPa or higher, which is particularly suitable for coke for blast furnaces, the volatile matter of the biomass is preferably 6 mass% or more. The higher the volatile matter of the biomass in the range of 1 mass% or more and less than 20 mass%, the higher the strength of the resulting agglomerate. By the volatile matter of the biomass being set to 6 mass% or more and less than 20 mass%, a low-cost method of producing coke that is strong enough to be used in conventional blast furnace processes can be provided.

Because the coke produced in the present embodiment is made exclusively from carbon-neutral biomass, its use in a blast furnace contributes to the reduction of carbon dioxide emissions during the steelmaking process.

### (Second Embodiment)

In the case described in the first embodiment, the method of producing an agglomerate mainly composed of carbon includes a grinding step of grinding biomass having a volatile matter of 1 mass% or more and less than 20 mass% to obtain a biomass powder having a maximum particle size of 300 µm or less, and a hot pressing step of compacting the biomass powder at a temperature included in a temperature range of 600 °C or more and 1250 °C or less in an oxygen-deprived environment to obtain an agglomerate. The present embodiment differs from the first embodiment in that the method of producing an agglomerate mainly composed of carbon further includes a mixing step of mixing coal having a volatile matter of 1 mass% or more and less than 20 mass% with biomass having a volatile matter of 1 mass% or more and less than 20 mass% to obtain a mixture, and in the grinding step, the mixture containing the coal in addition to the biomass as described above is ground. Otherwise, the second embodiment is the same as the first embodiment.

In the following description, an explanation of parts similar to the first embodiment will be omitted as appropriate. In the following, as in the first embodiment, the agglomerate mainly composed of carbon may be referred to simply as an agglomerate.

The method of producing an agglomerate according to the present embodiment can use coal or coal-derived raw material along with biomass as the raw material for the agglomerate. Therefore, the raw material can be procured relatively easily compared to the first embodiment.

Examples of coal with a volatile matter of 1 mass% or more and less than 20 mass% are some bituminous coals, semi-anthracite, and anthracite. Coal with a volatile matter of 1 mass% or more and less than 20 mass% has poor caking properties. Coal with a volatile matter of 1 mass% or more and less than 20 mass% may be coal that has lost its volatile matter for some reason during coal processing or coal that has been heat treated. In other words, the concept of coal with a volatile matter of 1 mass% or more and less than 20 mass% in the present embodiment encompasses coal-derived materials mainly composed of carbon derived from coal, such as heat-treated coal, in addition to unprocessed coal. In the following description of the first embodiment, references made simply to coal shall mean coal with a volatile matter of 1 mass% or more and less than 20 mass%.

The volatile matter of coal is measured according to "Coal and coke - Methods for proximate analysis" (JIS M 8812:2004) specified in the Japanese Industrial Standards (JIS).

In the case of heat treating coal to yield heat-treated coal, the heat treatment can be performed in the same way as in the case of biomass described in the first embodiment.

The lower the heat treatment temperature, the higher the residual volatile matter in the heat-treated coal, and therefore the more pronounced the solid phase sintering-like phenomenon is in the hot pressing step. As a result, an agglomerate with high bulk density and high strength can be obtained.

If the heat treatment temperature is below 500 °C, excessive volatile matter and tar will remain in the coal powder (coal particles) in the heat-treated coal and mixed powder. For example, if the volatile matter of the heat-treated coal exceeds 20 mass%, this could cause a decrease in bulk density due to foaming or expansion of the coal powder in the hot pressing step, or damage or staining of the hot pressing apparatus or the like, which is not desirable.

If the heat treatment temperature exceeds 1000 °C, the volatile matter remaining in the heat-treated coal and coal powder may be less than 1 mass%, making it difficult for the solid phase sintering-like phenomenon to occur, as described in the first embodiment.

Any coal may be used as the coal prior to heat treatment, and examples thereof include lignite, subbituminous coal, bituminous coal, semi-anthracite, and anthracite. These coals can be heat treated to produce heat-treated coal with a volatile matter adjusted to a suitable range.

As in the case of biomass described in the first embodiment, the reaction rate of the pyrolysis reaction of raw coal during heat treatment is usually fast, so the time required for the pyrolysis reaction in the heat treatment to be completed is short. Therefore, the treatment time required for heat treatment is 1 min or more. The time for heat treatment (processing time of heat treatment, hereinafter referred to as heat treatment time) is preferably 10 min or more. This eliminates the temperature difference between the temperature of the raw coal and the temperature of the container and allows for homogeneous heat treatment of the entire raw material coal. This also enables the heat treatment to be performed with the temperature of the entire raw coal reliably raised to an even heat treatment temperature (i.e., heated evenly), thereby suppressing variation in the quality of the heat-treated coal.

No upper limit is placed on the heat treatment time, but if the heat treatment time is too long, the energy required for heat treatment increases, which leads to an undesired increase in costs. A heat treatment time of 60 min or less is usually sufficient. The heat treatment time for the coal is the length of time during which the temperature of the raw coal is maintained at a predetermined heat treatment temperature from the point in time at which the temperature of the raw coal reaches this heat treatment temperature, as in the case of biomass.

As described above, the mixing step is a step of mixing coal having a volatile matter of 1 mass% or more and less than 20 mass% with biomass having a volatile matter of 1 mass% or more and less than 20 mass% to obtain a mixture. The coal and biomass may both not be heat treated, or both may be heat treated. Alternatively, only one may be heat treated.

No limitations are placed on the method and apparatus for mixing the coal and biomass. The mixture is preferably in a somewhat uniform state. This may increase the strength of the agglomerate. In the present embodiment, since the grinding step is performed after the mixing step, it suffices for the mixing in the mixing step to be uniform enough so as not to interfere with handling in the grinding step.

The method and apparatus for mixing the coal and biomass may involve mixing with a shovel or crane bucket while the coal and biomass are piled up in a storage area, or dropping the coal and biomass onto a conveyor belt from a hopper equipped with a quantitative dispensing apparatus such as a blending tank. Mixing apparatuses for powders may also be utilized to improve the uniformity of the mixture.

The mixing ratio of the coal and biomass is preferably such that the ratio of the biomass in the mixture is 1 mass% or more. As in the Examples below, the strength of the agglomerate produced in the present example tends to be higher as the volatile matter of the raw material is higher. In addition, in a case in which the coal and biomass have similar volatile matters, the agglomerate containing heat-treated biomass will have higher strength than the agglomerate produced from coal or heat-treated coal alone. The reason for this is not clear, but it is speculated to be because biomass has fewer aromatic rings than coal, and thus more aromatization and polycyclization reactions occur during the carbonization process, promoting the phenomenon of bonding between particles. Therefore, a mixture with some heat-treated biomass is preferable to coal or heat-treated coal by virtue of producing a high-strength agglomerate after hot pressing. In a case in which the ratio of biomass in the mixture is less than 1 mass%, the strength of the agglomerate might not be improved.

The grinding step is the same as in the first embodiment. In the grinding step in the present embodiment, the biomass and biomass powder in the grinding step of the first embodiment are replaced with the mixture and mixed powder.

In the present embodiment, the grinding step is performed after the mixing step, which naturally improves the uniformity of mixing of the mixed powder due to the agitation phenomenon during the grind process.

The hot pressing step is also the same as in the first embodiment. In the hot pressing step in the present embodiment, the biomass powder in the hot pressing step of the first embodiment is replaced by the mixed powder.

The mixed powder to be used in the hot pressing step preferably has a volatile matter of 1 mass% or more. The mixed powder preferably has a volatile matter of less than 20 mass%. If the volatile matter is less than 1 mass%, it may not be possible to obtain an agglomerate of appropriate bulk density or strength from the biomass powder.

### (Third Embodiment)

In the case described in the first embodiment, the method of producing an agglomerates mainly composed of carbon includes the hot pressing step of compacting the biomass powder at a temperature included in a temperature range of 600 °C or more and 1250 °C or less in an oxygen-deprived environment to obtain an agglomerate. The present embodiment differs from the first embodiment in that the method of producing an agglomerate mainly composed of carbon further includes a powder mixing step of mixing coal powder with biomass powder to obtain a mixed powder, the coal powder being a powder of coal having a volatile matter of 1 mass% or more and less than 20 mass% and a maximum particle size of 300 µm or less, the biomass powder being a powder of biomass having a volatile matter of 1 mass% or more and less than 20 mass% on a dry basis and a maximum particle size of 300 µm or less, and in the hot pressing step, this mixed powder is compacted at a temperature included in a temperature range of 600 °C or more and 1250 °C or less in an oxygen-deprived environment to obtain an agglomerate. Otherwise, the second embodiment is the same as the first embodiment. The hot pressing step in the present embodiment is the same as in the second embodiment.

In the following description, an explanation of parts similar to the first embodiment will be omitted as appropriate. In the following description, parts similar to the second embodiment will indicated as such, and a detailed explanation will be omitted as appropriate. In the following, as in the first embodiment, the agglomerate mainly composed of carbon may be referred to simply as an agglomerate.

As in the first embodiment, biomass powder may be obtained by grinding biomass. In other words, the present embodiment may include the same grinding step as the first embodiment. The biomass powder may be separately purchased in powder form. For example, the biomass powder may be delivered from another business or purchased.

The coal powder in the present embodiment may be obtained by grinding coal. The coal may be ground by performing the same grinding step as in the first embodiment with coal instead of biomass. The coal powder may be separately purchased in powder form. For example, the coal powder may be delivered from another business or purchased.

The powder mixing step is the step of mixing coal powder of 300 µm or less with biomass powder of 300 µm or less to obtain a mixed powder, as described above.

The method and apparatus for mixing the coal powder and biomass powder are not limited as long as they are suitable for mixing powders of 300 µm or less. The mixed powder is preferably in a uniform state. This may increase the strength of the agglomerate. The method and apparatus for mixing the coal powder and biomass powder include those that use rotational force and those that use shear force. From the perspective of obtaining a higher mixing capacity in a shorter time, a mixing apparatus using shear force is preferred for the method and apparatus for mixing the coal powder and biomass powder. Examples of mixing apparatuses that use rotational force include a conical mixer equipped with a screw-type agitator that revolves while rotating on its own axis, a mixing V-type blender equipped with a rotating agitator blade at the bottom, and a static mixer with a plurality of twisted baffles arranged in the flow path. Examples of mixing apparatuses that utilize shear force include Eirich mixers, Apex mixers, and Lodige mixers that are equipped with highspeed rotary vanes (choppers) that impart a strong shear rate to the mixture and promote shear mixing.

### EXAMPLES

The present embodiment is explained below based on examples. However, the present embodiment is not limited to the following examples.

### (Example 1)

As Example 1, only heat-treated biomass of various volatile matters was used to produce agglomerates by the production method according to the present embodiment, and the agglomerates were evaluated.

The heat-treated biomass was obtained by subjecting coniferous woody biomass to heat treatment at a temperature of 600 °C or more and 1200 °C or less.

The heat-treated biomass was then subjected to grinding (grinding step) to a particle size of 74 µm or less (200 mesh pass) to obtain biomass powder (grinding step). An ultra centrifugal grinder (manufacturer: Verder Scientific, model: ZM200) was used for both of the above grinding processes.

The biomass powder was further subjected to hot pressing (hot pressing step). First, a mold (press mold, diameter: 12 mm) was filled with 1.32 g of biomass powder. The biomass powder was then heated at a heating rate of 20 °C/min, starting from room temperature until reaching 1000 °C, while applying a molding pressure (mechanical pressure) of 50 MPa under a nitrogen flow. After reaching 1000 °C, the mold was further held at 1000 °C for 5 min. The temperature was then lowered and agglomerates (1-1 to 1-6) according to Example 1 were recovered.

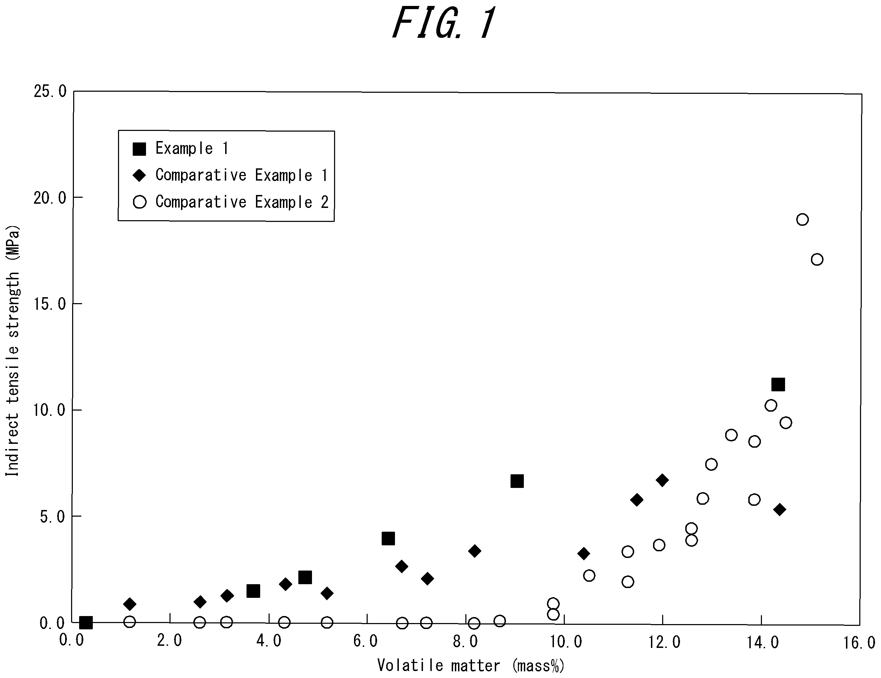

The bulk density and indirect tensile strength were measured for the above agglomerates. The indirect tensile strength was measured as the cold indirect tensile strength measured using the method described in NPL 1. The bulk density, as described above, is calculated from the dimensions of the external volume measured by calipers and the mass measured by an electronic balance. Table 1 lists the heat treatment temperature of the biomass used to produce each agglomerate in Example 1, the volatile matter after heat treatment, and the bulk density and indirect tensile strength of the agglomerate. FIG. 1 is a graph illustrating the relationship between indirect tensile strength and volatile matter for the agglomerates according to Example 1.

### [Table 1]

**Table 1]**

| Agglomerate | Heat treatment temperature (°C) | Volatile matter (mass%) | Bulk density (g/cm³) | Indirect tensile strength (MPa) |
|---|---|---|---|---|
| 1-1 | 600 | 14.4 | 1.24 | 11.3 |
| 1-2 | 700 | 9.0 | 1.20 | 6.7 |
| 1-3 | 800 | 6.4 | 1.12 | 4.0 |
| 1-4 | 900 | 4.8 | 1.04 | 2.1 |
| 1-5 | 1000 | 3.7 | 1.04 | 1.5 |
| 1-6 | 1200 | 0.3 | no agglomeration | 0.0 |

The following describes the observations of a polished cross-section (cross-sectional polished surface) of an agglomerate according to the present example, which was produced using a heat-treated biomass with a volatile matter of 14.3 mass%.

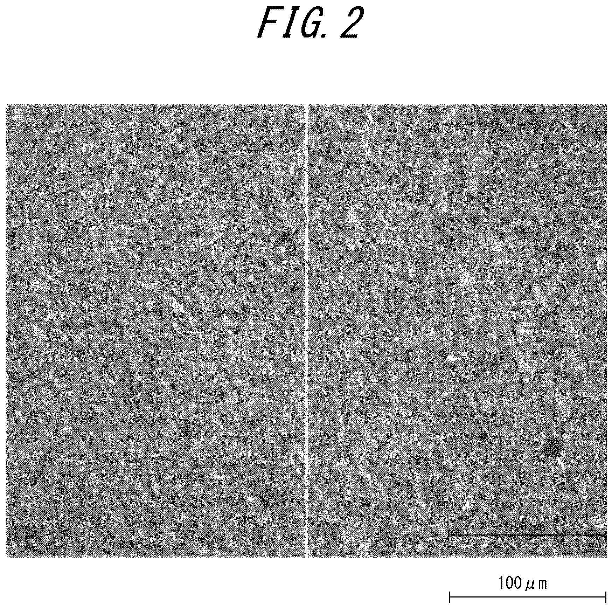

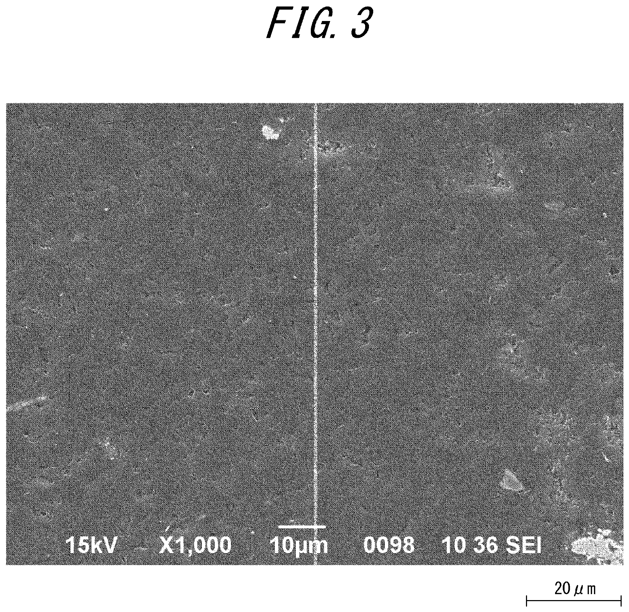

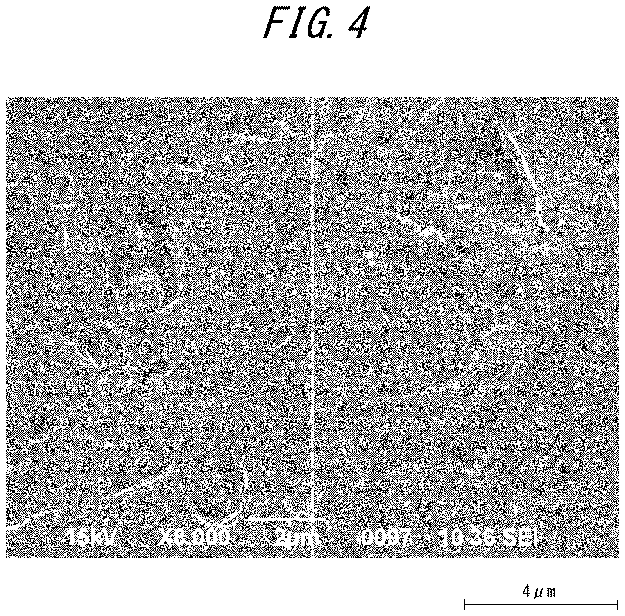

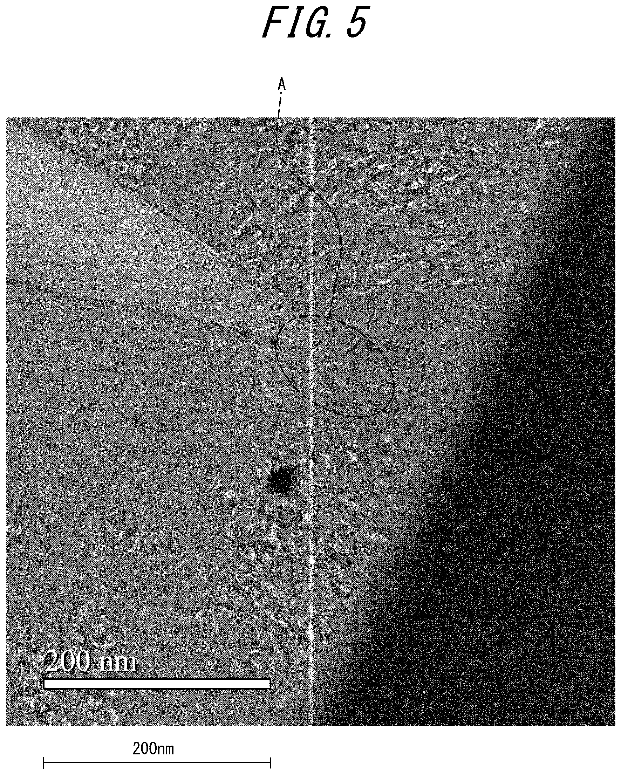

FIGS. 2 through 6 illustrate a polarized light microscope image of the above cross-section (see FIG. 2, 100x magnification, crossed Nicols, oil immersion condition), scanning electron microscope images of the above cross-section (see FIGS. 3 and 4, each secondary electron images, 1000x and 8000x magnification) and transmission electron microscope (TEM) images (see FIGS. 5 and 6, 100,000x and 500,000x magnification).

As illustrated in FIG. 2, the cross-section of the agglomerate according to the present Example has a substrate portion (gray area) exhibiting an isotropic microstructure over the entire field of view. In the cross-section of this agglomerate, the presence of a well-developed anisotropic microstructure characteristic of liquid phase carbonization is not observed. In the cross-section of this agglomerate, it can be observed that minute pores (black parts) smaller than the particle size of the biomass powder are finely dispersed. From the cross-section of this agglomerate, no evidence of adhesion between the biomass powder particles could be confirmed.

As illustrated in FIGS. 3 and 4, in the cross-section of the agglomerate according to this Example, it was confirmed that the particles of the biomass powder were bonded to each other at the contact points while maintaining their shape. In other words, it is presumed that the biomass powder particles did not melt during the hot pressing process but rather maintained their original shape. It is also thought that at the contact points between the biomass powder particles, bonding occurred by a solid phase sintering-like phenomenon. Since no detectable difference in a contrast was observed at the interface between the biomass powder particles, it is thought that the composition is the same within the biomass powder particles and at the interface thereof.

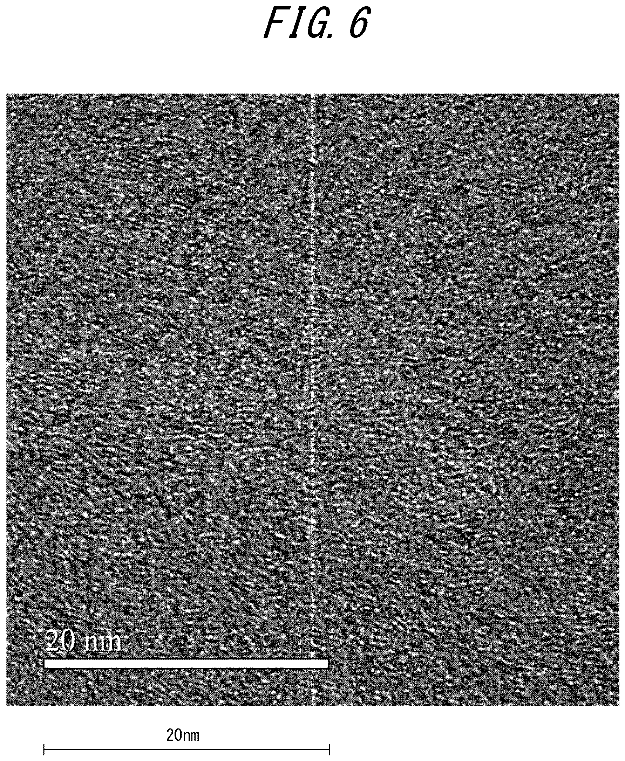

FIGS. 5 and 6 are images of the agglomerate according to the present Example after being thinned by FIB (Focused Ion Beam) processing and imaged with a transmission electron microscope (TEM). In FIGS. 5 and 6, no specific structural differences were observed at the interface between biomass powder particles, and it was observed that the biomass powder particles were bonded to each other at the atomic level. FIG. 6 is an image of section A illustrated in FIG. 5, captured at high magnification.

As described above, in the agglomerate of the present Example, it is clear that the heat-treated biomass particles bond to each other at the contact points by a solid phase sintering-like phenomenon, thereby agglomerating and achieving high strength.

### (Comparative Example 1)

The biomass in Example 1 was replaced with coal, and coal powder was used to produce an agglomerate, which was then evaluated.

In this Comparative Example, various raw coals were pre-ground to a particle size of 74 µm or less (200 mesh pass) and heat treated at different heat treatment temperatures in a range of 600 °C or more and 900 °C or less to obtain heat-treated coal. In the case of raw coal with high volatile matter (for example, the case of the raw coal being coking coal), the heat treatment may cause agglomeration. Therefore, in this Comparative Example, the heat-treated coal produced from each of the raw coals was ground to a particle size of 74 µm or less after the heat treatment to obtain coal powder. An ultra centrifugal grinder (manufacturer: Verder Scientific, model: ZM200) was used for both of the above grinding processes.

In this Comparative Example, from the hot pressing step onward, the biomass powder in Example 1 was replaced with coal powder, and the other steps were performed in the same manner to obtain agglomerates (R1-1 to R1-12) according to Comparative Example 1.

The bulk density and indirect tensile strength were measured for the above agglomerates, as in Example 1. Table 2 lists the heat treatment temperature of the coal used to produce each agglomerate in Comparative Example 1, the volatile matter after heat treatment, and the bulk density and indirect tensile strength of the agglomerate. In addition to the results of Example 1, the graph in FIG. 1 also illustrates the relationship between indirect tensile strength and volatile matter of the agglomerates in Comparative Example 1.

### [Table 2]

**[Table 2]**

| Agglomerate | Heat treatment temperature (°C) | Volatile matter (mass%) | Bulk density (g/cm³) | Indirect tensile strength (MPa) |
|---|---|---|---|---|
| R1-1 | 900 | 1.2 | 1.33 | 0.9 |
| R1-2 | 900 | 2.6 | 1.29 | 1.0 |
| R1-3 | 800 | 3.2 | 1.36 | 1.2 |
| R1-4 | 800 | 5.2 | 1.33 | 1.4 |
| R1-5 | 700 | 4.3 | 1.40 | 1.8 |
| R1-6 | 700 | 7.2 | 1.37 | 2.1 |
| R1-7 | 600 | 6.7 | 1.38 | 2.7 |
| R1-8 | 600 | 8.2 | 1.43 | 3.4 |
| R1-9 | 600 | 10.4 | 1.44 | 3.3 |
| R1-10 | 600 | 11.5 | 1.41 | 5.9 |
| R1-11 | 600 | 12.0 | 1.41 | 6.8 |
| R1-12 | 600 | 14.4 | 1.43 | 5.4 |

### (Comparative Example 2)

As Comparative Example 2, raw coal or heat-treated coal with various volatile matters was used to produce agglomerates by the method of producing coke (conventional method) described in NPL 2, and the agglomerates were evaluated.

A mold (press mold, diameter: 12 mm) was filled with 1.50 g of coal powder obtained in the same way as in Comparative Example 1. A mechanical pressure of 100 MPa was then applied to obtain the molding. Next, the molding was heated at a heating rate of 3 °C/min until the inside of the electric furnace reached 1000 °C. After reaching 1000 °C, the inside of the electric furnace was further held at 1000 °C for 5 min. The temperature was then lowered and agglomerates (R2-1 to R2-26) were recovered.

The bulk density and indirect tensile strength were measured for the above agglomerates, as in Example 1. Table 3 lists the heat treatment temperature of the coal used to produce each agglomerate in Comparative Example 2, the volatile matter after heat treatment, and the bulk density and indirect tensile strength of the agglomerate. In addition to the results of Example 1 and Comparative Example 2, FIG. 1 includes a graph illustrating the relationship between bulk density and volatile matter of the agglomerates in Comparative Example 2.

### [Table 3]

**[Table 3]**

| Agglomerate | Heat treatment temperature (°C) | Volatile matter (mass%) | Bulk density (g/cm³) | Indirect tensile strength (MPa) |
|---|---|---|---|---|
| R2-1 | 900 | 1.2 | no agglomeration | 0.0 |
| R2-2 | 900 | 2.6 | no agglomeration | 0.0 |
| R2-3 | 800 | 3.2 | no agglomeration | 0.0 |
| R2-4 | 800 | 5.2 | no agglomeration | 0.0 |
| R2-5 | 700 | 4.3 | no agglomeration | 0.0 |
| R2-6 | 700 | 7.2 | no agglomeration | 0.0 |
| R2-7 | 600 | 6.7 | no agglomeration | 0.0 |
| R2-8 | 600 | 8.2 | no agglomeration | 0.0 |
| R2-9 | 600 | 8.7 | 1.02 | 0.1 |
| R2-10 | 600 | 9.8 | 1.15 | 0.5 |
| R2-11 | 600 | 9.8 | 1.18 | 0.9 |
| R2-12 | 600 | 10.5 | 1.25 | 2.2 |
| R2-13 | 600 | 11.3 | 1.22 | 2.0 |
| R2-14 | 600 | 11.3 | 1.11 | 3.4 |
| R2-15 | 600 | 11.9 | 1.27 | 3.7 |
| R2-16 | 600 | 12.6 | 1.24 | 4.0 |
| R2-17 | 600 | 12.6 | 1.14 | 4.5 |
| R2-18 | 600 | 12.8 | 1.19 | 5.9 |
| R2-19 | 600 | 13.0 | 1.19 | 7.5 |
| R2-20 | 600 | 13.4 | 1.30 | 8.9 |
| R2-21 | 600 | 13.9 | 1.28 | 8.6 |
| R2-22 | 600 | 13.9 | 1.15 | 5.9 |
| R2-23 | 600 | 14.2 | 1.20 | 10.3 |
| R2-24 | 600 | 14.5 | 1.35 | 9.5 |
| R2-25 | 600 | 14.8 | 1.39 | 19.1 |
| R2-26 | 600 | 15.1 | 1.34 | 17.2 |

From the results of FIG. 1 and Tables 1 and 2, it can be seen that when the raw materials have equivalent volatile matters, the agglomerates according to Example 1, in which only biomass was used as the raw material, have higher strength than the agglomerates according to Comparative Example 1, which was produced by the same production method except that only heat-treated coal was used as the raw material.

In addition, from the results of FIG. 1 and Tables 1 and 3, it can be seen that when the raw materials have equivalent volatile matters, the agglomerates according to Example 1, in which only heat-treated biomass having a volatile matter of less than 14.5 mass% was used, have higher strength than the agglomerates according to Comparative Example 2, in which only heat-treated coal was used as a raw material and which were produced by a conventional method.

In addition, from the results of FIG. 1 and Table 1, it is clear that when the agglomerate according to Example 1 has a volatile matter exceeding 5 mass%, it is possible to produce an agglomerate (coke) having a strength sufficient for use in a conventional blast furnace process.

It is thus clear that the agglomerate produced using biomass is superior in terms of strength to the agglomerate produced using only coal.

### (Example 2)

In order to confirm the effect of molding pressure, agglomerates according to Example 2 were produced and evaluated as follows.

Biomass powder was obtained as in Example 1 using heat-treated biomass with a volatile matter of 14.3 mass%. Then, as in Example 1, a mold (press mold, diameter: 12 mm) was filled with 1.32 g of biomass powder. The biomass powder was then heated at a heating rate of 20 °C/min, starting from room temperature until reaching 1000 °C, under a nitrogen flow. After reaching 1000 °C, the mold was further held at 1000 °C for 5 min. In the present example, the molding pressure of 10 MPa to 50 MPa was applied only in the range of 600 °C or more to 1000 °C in the hot pressing. The temperature was then lowered and agglomerates according to Example 2 were recovered.

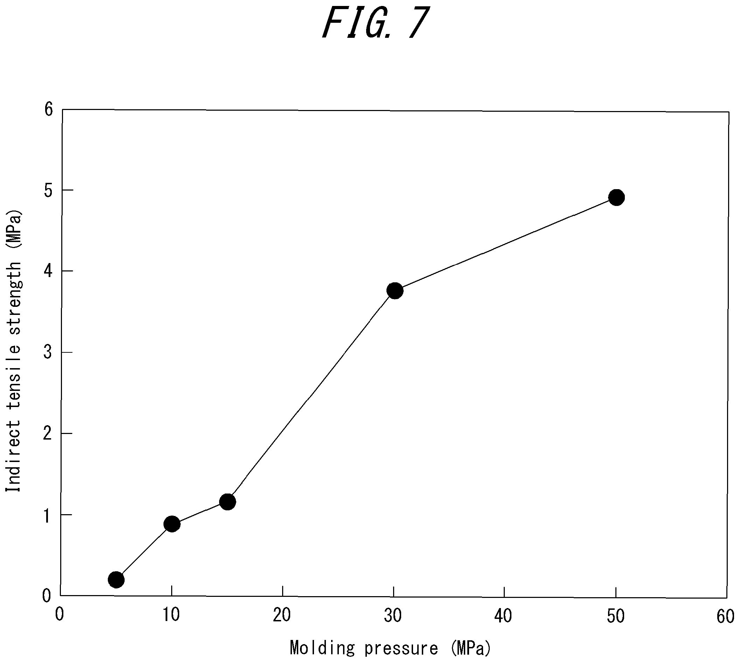

The indirect tensile strength was measured for the above agglomerates, as in Example 1. FIG. 7 is a graph illustrating the relationship between indirect tensile strength and molding pressure for the agglomerates according to Example 2.

It is clear from the graph in FIG. 7 that the strength increases monotonically as the molding pressure increases. It can be seen that to produce an agglomerate with a strength of 1 MPa or higher, it suffices for the molding pressure to be above 10 MPa (11 MPa or more).

### (Example 3)

In order to evaluate the case in which an agglomerate is obtained from coal and biomass, and in particular, the case in which the agglomerate is obtained from a mixed powder made by grinding a mixture of coal and biomass, agglomerates according to Example 3 were produced and evaluated as follows.

Mixtures were obtained using heat-treated coal (4.7 mass% volatile matter) and heat-treated biomass (14.3 mass% volatile matter). The mixture ratios of heat-treated biomass in the mixtures were 0 mass% (heat-treated coal only), 20 mass%, 40 mass%, 60 mass%, 80 mass%, and 100 mass% (heat-treated biomass only).

In the present example, heat-treated coal and heat-treated biomass were collected and hand mixed to achieve the above mixture ratios of heat-treated biomass. The mixtures were ground in the same manner as the heat-treated biomass in Example 1 to obtain mixed powders of 74 µm or less (200 mesh pass). The mixed powders were hot-pressed in the same manner as the biomass powder of Example 1 to obtain agglomerates (3-1 to 3-6) according to Example 3.

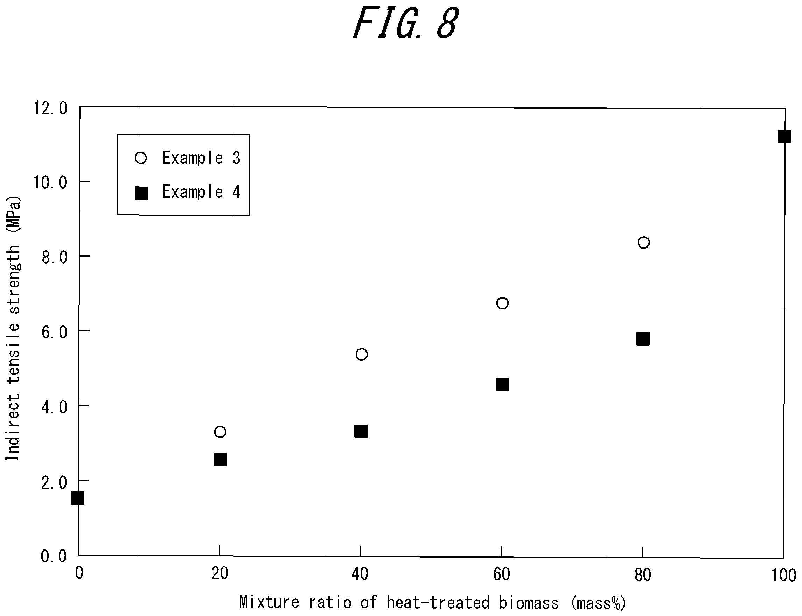

The indirect tensile strength was measured for the above agglomerates, as in Example 1. Table 4 lists the mixture ratio of the heat-treated biomass used to produce each agglomerate in Example 3 and the indirect tensile strength of the agglomerate. FIG. 8 is a graph illustrating the relationship between indirect tensile strength and mixture ratio of heat-treated biomass for an agglomerate according to Example 4.

### [Table 4]

**[Table 4]**

| Agglomerate | Mixture ratio of heat-treated biomass (mass%) | Indirect tensile strength (MPa) |
|---|---|---|
| 3-1 | 0 | 1.5 |
| 3-2 | 20 | 3.3 |
| 3-3 | 40 | 5.4 |
| 3-4 | 60 | 6.8 |
| 3-5 | 80 | 8.4 |
| 3-6 | 100 | 11.3 |

### (Example 4)

In order to evaluate the case in which an agglomerate is obtained from coal and biomass, and in particular, the case in which the agglomerate is obtained from a mixed powder obtained by mixing coal powder and biomass powder from separately ground coal and biomass, agglomerates according to Example 4 were produced and evaluated as follows.

The biomass powder was obtained by processing heat-treated biomass with a volatile matter of 14.3 mass% in the same way as in Example 1.

The coal powder was obtained by processing heat-treated coal with a volatile matter of 4.7 mass% in the same way as in Comparative Example 1.

Next, the biomass powder and the coal powder were mixed to obtain a mixed powder. The mixture ratios of the heat-treated biomass in the mixed powders were 0 mass% (coal powder only), 20 mass%, 40 mass%, 60 mass%, 80 mass%, and 100 mass% (biomass powder only).

In the present example, heat-treated coal and heat-treated biomass were collected and mixed thoroughly in a mortar to obtain mixed powders with the above mixture ratios of heat-treated biomass. The mixed powders were hot-pressed in the same manner as the biomass powder of Example 1 to obtain agglomerates (4-1 to 4-6) according to Example 4.

The indirect tensile strength was measured for the above agglomerates, as in Example 1. Table 5 lists the mixture ratio of the heat-treated biomass used to produce each agglomerate in Example 4 and the indirect tensile strength of the agglomerate. FIG. 8 also illustrates the relationship between indirect tensile strength and mixture ratio of heat-treated biomass for the agglomerates according to Example 5, together with the results of Example 4.

### [Table 5]

**[Table 5]**

| Agglomerate | Mixture ratio of heat-treated biomass (mass%) | Indirect tensile strength (MPa) |
|---|---|---|
| 4-1 | 0 | 1.5 |
| 4-2 | 20 | 2.6 |
| 4-3 | 40 | 3.4 |
| 4-4 | 60 | 4.6 |
| 4-5 | 80 | 5.8 |
| 4-6 | 100 | 11.3 |

In both Examples 4 and 5, the agglomerates made using biomass (in which biomass was mixed) exhibited higher strength than the agglomerates produced using only coal.

In this way, a method of producing an agglomerate by producing an agglomerate mainly composed of carbon using biomass can be provided.

The configurations disclosed in the above embodiments (including other embodiments; the same applies below) can be applied in combination with the configurations disclosed in other embodiments, as long as no contradiction arises. Furthermore, the embodiments disclosed in the present specification are examples; the embodiments of the present disclosure are not limited thereto and may be modified as appropriate within a scope that does not depart from the purpose of the present disclosure.

### INDUSTRIAL APPLICABILITY

The present disclosure can be applied to a method of producing an agglomerate mainly composed of carbon.

## Claims

1. A method of producing an agglomerate mainly composed of carbon, the method comprising:
a grinding step of grinding biomass having a volatile matter of 1 mass% or more and less than 20 mass% on a dry basis to obtain a biomass powder having a maximum particle size of 300 µm or less, the volatile matter of the biomass being measured according to "Coal and coke - Methods for proximate analysis" (JIS M 8812:2004) specified in the Japanese Industrial Standards (JIS), and the particle size being measured using a laser diffraction and scattering particle size distribution analyzer "Laser Micronizer LMS-3000" manufactured by Malvern Panalytical, as described in the description; and
a hot pressing step of compacting the biomass powder at a temperature included in a temperature range of 600 °C or more and 1250 °C or less in an oxygen-deprived environment to obtain an agglomerate.

2. A method of producing an agglomerate mainly composed of carbon, the method comprising:
a mixing step of mixing coal having a volatile matter of 1 mass% or more and less than 20 mass% on a dry basis with biomass having a volatile matter of 1 mass% or more and less than 20 mass% on a dry basis to obtain a mixture, the volatile matter being measured according to "Coal and coke - Methods for proximate analysis" (JIS M 8812:2004) specified in the Japanese Industrial Standards (JIS), as described in the description;
a grinding step of grinding the mixture to obtain a mixed powder having a maximum particle size of 300 µm or less, the particle size being measured using a laser diffraction and scattering particle size distribution analyzer "Laser Micronizer LMS-3000" manufactured by Malvern Panalytical, as described in the description; and
a hot pressing step of compacting the mixed powder at a temperature included in a temperature range of 600 °C or more and 1250 °C or less in an oxygen-deprived environment to obtain an agglomerate.

3. A method of producing an agglomerate mainly composed of carbon, the method comprising:
a powder mixing step of mixing coal powder with biomass powder to obtain a mixed powder, the coal powder being a powder of coal having a volatile matter of 1 mass% or more and less than 20 mass% on a dry basis and a maximum particle size of 300 µm or less, the biomass powder being a powder of biomass having a volatile matter of 1 mass% or more and less than 20 mass% on a dry basis and a maximum particle size of 300 µm or less, the volatile matter being measured according to "Coal and coke - Methods for proximate analysis" (JIS M 8812:2004) specified in the Japanese Industrial Standards (JIS), and the particle size being measured using a laser diffraction and scattering particle size distribution analyzer "Laser Micronizer LMS-3000" manufactured by Malvern Panalytical, as described in the description; and
a hot pressing step of compacting the mixed powder at a temperature included in a temperature range of 600 °C or more and 1250 °C or less in an oxygen-deprived environment to obtain an agglomerate.

4. The method of producing an agglomerate mainly composed of carbon according to claim 2 or 3, wherein the coal is heat-treated coal.

5. The method of producing an agglomerate mainly composed of carbon according to any one of claims 1 to 4, wherein the biomass is heat-treated biomass.

6. The method of producing an agglomerate mainly composed of carbon according to any one of claims 1 to 5, wherein a molding pressure of the compacting is 20 MPa or higher.

7. The method of producing an agglomerate mainly composed of carbon according to any one of claims 1 to 6, wherein in the compacting, heating is started after pressurization is started.

## Patentansprüche

1. Verfahren zur Herstellung eines hauptsächlich aus Kohlenstoff zusammengesetzten Agglomerats, wobei das Verfahren umfasst:
einen Mahlschritt zum Vermahlen von Biomasse, die 1 Masse-% oder mehr und weniger als 20 Masse-% auf Trockenbasis an flüchtigen Bestandteilen aufweist, um ein Biomassepulver mit einer maximalen Partikelgröße von 300 µm oder weniger zu erhalten, wobei die flüchtigen Bestandteile der Biomasse gemäß "Kohle und Koks - Verfahren zur Immediatanalyse" (JIS M 8812:2004), angegebenen in den japanischen Industriestandards (JIS), gemessen werden und die Partikelgröße unter Verwendung eines Laserbeugungs- und Streuungs-Partikelgrößenverteilungsanalysators "Laser Micronizer LMS-3000", hergestellt von Malvern Panalytical, wie in der Beschreibung beschrieben gemessen wird, und
einen Heißpressschritt zum Verdichten des Biomassepulvers bei einer Temperatur, die in einem Temperaturbereich von 600°C oder mehr und 1.250°C oder weniger eingeschlossen ist, in einer sauerstoffarmen Umgebung, um ein Agglomerat zu erhalten.

2. Verfahren zur Herstellung eines hauptsächlich aus Kohlenstoff zusammengesetzten Agglomerats, wobei das Verfahren umfasst:
einen Mischschritt zum Mischen von Kohle, die 1 Masse-% oder mehr und weniger als 20 Masse-% auf Trockenbasis an flüchtigen Bestandteilen aufweist, mit Biomasse, die 1 Masse-% oder mehr und weniger als 20 Masse-% auf Trockenbasis an flüchtigen Bestandteilen aufweist, um eine Mischung zu erhalten, wobei die flüchtigen Bestandteile gemäß "Kohle und Koks - Verfahren zur Immediatanalyse" (JIS M 8812:2004), angegebenen in den japanischen Industriestandards (JIS), wie in der Beschreibung beschrieben gemessen werden,
einen Mahlschritt zum Mahlen der Mischung, um ein Mischpulver mit einer maximalen Partikelgröße von 300 µm oder weniger zu erhalten, wobei die maximale Partikelgröße unter Verwendung eines Laserbeugungs- und Streuungpartikelgrößenverteilungsanalysators "Laser Micronizer LMS-3000", hergestellt von Malvern Panalytical, wie in der Beschreibung beschrieben gemessen wird, und
einen Heißpressschritt zum Verdichten des Mischpulvers bei einer Temperatur, die in einem Temperaturbereich von 600°C oder mehr und 1.250°C oder weniger eingeschlossen ist, in einer sauerstoffarmen Umgebung, um ein Agglomerat zu erhalten.

3. Verfahren zur Herstellung eines hauptsächlich aus Kohlenstoff zusammengesetzten Agglomerats, wobei das Verfahren umfasst:
einen Pulvermischschritt zum Mischen von Kohlepulver mit Biomassepulver, um ein Mischpulver zu erhalten, wobei das Kohlepulver ein Pulver aus Kohle ist, die 1 Masse-% oder mehr und weniger als 20 Masse-% auf Trockenbasis an flüchtigen Bestandteilen aufweist und eine maximale Partikelgröße von 300 µm aufweist, wobei das Biomassepulver ein Pulver aus Biomasse ist, die 1 Masse-% oder mehr und weniger als 20 Masse-% auf Trockenbasis an flüchtigen Bestandteilen aufweist und eine maximale Partikelgröße von 300 µm oder weniger aufweist, wobei die flüchtigen Bestandteile gemäß "Kohle und Koks - Verfahren zur Immediatanalyse" (JIS M 8812:2004), angegebenen in den japanischen Industriestandards (JIS), gemessen werden und die Partikelgröße unter Verwendung eines Laserbeugungs- und Streuungs-Partikelgrößenverteilungsanalysators "Laser Micronizer LMS-3000", hergestellt von Malvern Panalytical, wie in der Beschreibung beschrieben gemessen wird, und
einen Heißpressschritt zum Verdichten des Mischpulvers bei einer Temperatur, die in einem Temperaturbereich von 600°C oder mehr und 1.250°C oder weniger eingeschlossen ist, in einer sauerstoffarmen Umgebung, um ein Agglomerat zu erhalten.

4. Verfahren zur Herstellung eines hauptsächlich aus Kohlenstoff zusammengesetzten Agglomerats gemäß Anspruch 2 oder 3, wobei die Kohle wärmebehandelte Kohle ist.

5. Verfahren zur Herstellung eines hauptsächlich aus Kohlenstoff zusammengesetzten Agglomerats gemäß einem der Ansprüche 1 bis 4, wobei die Biomasse wärmebehandelte Biomasse ist.

6. Verfahren zur Herstellung eines hauptsächlich aus Kohlenstoff zusammengesetzten Agglomerats gemäß einem der Ansprüche 1 bis 5, wobei der Formdruck zum Verdichten 20 MPa oder höher ist.

7. Verfahren zur Herstellung eines hauptsächlich aus Kohlenstoff zusammengesetzten Agglomerats gemäß einem der Ansprüche 1 bis 6, wobei beim Verdichten eine Erwärmung nach Druckbeaufschlagung begonnen wird.

## Revendications

1. Procédé de production d'un agglomérat composé principalement de carbone, le procédé comprenant :
une étape de broyage consistant à broyer une biomasse présentant une matière volatile de 1 % en masse ou plus et de moins de 20 % en masse sur une base sèche pour obtenir une poudre de biomasse présentant une granulométrie maximale de 300 µm ou moins, la matière volatile de la biomasse étant mesurée selon la norme « Charbon et coke - Procédés d'analyse immédiate » (JIS M 8812:2004) spécifiée dans les normes industrielles japonaises (JIS), et la granulométrie étant mesurée à l'aide d'un analyseur de distribution granulométrique par diffraction et diffusion laser « Laser Micronizer LMS-3000 » fabriqué par Malvern Panalytical, comme décrit dans la description ; et
une étape de pressage à chaud consistant à compacter la poudre de biomasse à une température incluse dans une plage de températures de 600 °C ou plus à 1 250 °C ou moins dans un environnement pauvre en oxygène pour obtenir un agglomérat.

2. Procédé de production d'un agglomérat composé principalement de carbone, le procédé comprenant :
une étape de mélange consistant à mélanger du charbon présentant une matière volatile de 1 % en masse ou plus et de moins de 20 % en masse sur une base sèche avec de la biomasse présentant une matière volatile de 1 % en masse ou plus et de moins de 20 % sur une base sèche
pour obtenir un mélange, la matière volatile étant mesurée selon la norme « Charbon et coke - Procédés d'analyse immédiate » (JIS M 8812:2004) spécifiée dans les normes industrielles japonaises (JIS), comme décrit dans la description,
une étape de broyage consistant à broyer le mélange pour obtenir une poudre mixte présentant une granulométrie maximale de 300 µm ou moins, la granulométrie étant mesurée à l'aide d'un analyseur de distribution granulométrique par diffraction et diffusion laser « Laser Micronizer LMS-3000 » fabriqué par Malvern Panalytical, comme décrit dans la description ; et
une étape de pressage à chaud consistant à compacter la poudre mixte à une température incluse dans une plage de températures de 600 °C ou plus et de 1 250 °C ou moins dans un environnement pauvre en oxygène pour obtenir un agglomérat.

3. Procédé de production d'un agglomérat composé principalement de carbone, le procédé comprenant :
une étape de mélange de poudres consistant à mélanger une poudre de charbon avec une poudre de biomasse pour obtenir une poudre mixte, la poudre de charbon étant une poudre de charbon présentant une matière volatile de 1 % en masse ou plus et de moins de 20 % en masse sur une base sèche et une granulométrie maximale de 300 µm ou moins, la poudre de biomasse étant une poudre de biomasse présentant une matière volatile de 1 % en masse ou plus et de moins de 20 % en masse sur une base sèche et une granulométrie maximale de 300 µm ou moins, la matière volatile étant mesurée selon la norme « Charbon et coke - Procédés d'analyse immédiate » (JIS M 8812:2004) spécifiée dans les normes industrielles japonaises (JIS) et la granulométrie étant mesurée à l'aide d'un analyseur de distribution granulométrique par diffraction et diffusion laser « Laser Micronizer LMS-3000 » fabriqué par Malvern Panalytical, comme décrit dans la description ; et
une étape de pressage à chaud consistant à compacter la poudre mixte à une température incluse dans une plage de températures de 600 °C ou plus et de 1 250 °C ou moins dans un environnement pauvre en oxygène pour obtenir un agglomérat.

4. Procédé de production d'un agglomérat composé principalement de carbone selon la revendication 2 ou la revendication 3, dans lequel le charbon est un charbon traité thermiquement.

5. Procédé de production d'un agglomérat composé principalement de carbone selon l'une quelconque des revendications 1 à 4, dans lequel la biomasse est une biomasse traitée thermiquement.

6. Procédé de production d'un agglomérat composé principalement de carbone selon l'une quelconque des revendications 1 à 5, dans lequel une pression de moulage du compactage est de 20 MPa ou plus.

7. Procédé de production d'un agglomérat composé principalement de carbone selon l'une quelconque des revendications 1 à 6, dans lequel lors du compactage, le chauffage est démarré après le début de la mise sous pression.
